# EUROPEAN PATENT APPLICATION

(11) **EP 4 671 951 A1**
(43) Date of publication of application: **31.12.2025**
(21) Application number: 25158934.7
(22) Date of filing: 19.02.2025
(51) Int. Cl.: G06F 3/06, G06F 11/20

(54) **METHOD, APPARATUS, SYSTEM, DEVICE AND STORAGE MEDIUM FOR SCHEDULING RESOURCE FOR JUST A BUNCH OF DISKS**

(30) Priority: 28.06.2024 CN 202410870209
(71) Applicant: Beijing Volcano Engine Technology Co., Ltd., Beijing 100190 (CN)
(72) Inventor: CHEN, Shuqian, Chaoyang District, Beijing 100028 (CN)
(74) Representative: Marks & Clerk LLP

(57) **Abstract**

The disclosed embodiments provide a method, an apparatus, a system, a device and a storage medium for scheduling a resource for Just a Bunch of Disks (JBOD). The method comprises: acquiring (S101), by a control and scheduling service node, attribution data of the JBOD, wherein the attribution data of the JBOD represents a mapping relationship between at least one JBOD and a storage service node to which the at least one JBOD belongs; and detecting (S102), by the control and scheduling service node, an abnormal storage service node in the dual-head storage service node group, and scheduling, by the control and scheduling service node, a JBOD mounted on the abnormal storage service node to a normal storage service node in the dual-head storage service node group based on the attribution data of the JBOD.

## Description

### FIELD

The embodiments of the present disclosure relate to a technical field of data storage, and in particular to a method, an apparatus, a system, a device and a storage medium for scheduling a resource for Just a Bunch of Disks.

### BACKGROUND

Currently, in an application scenario of storing cold data with low access frequency, it is necessary to ensure security and availability of stored data, while also considering the scale of the stored data. Thus, the approach for storing data needs to be optimized to reduce the cost for storing data.

In the prior art, by combining multiple disk drives into a disk array (Just a Bunch of Disks, JBOD) based on a storage architecture of the JBOD, low-cost data storage can be achieved. At the same time, two or more JBODs are mounted on a same storage service node for managing and scheduling to form a dual or multi head data storage system, which can achieve high availability of data storage services.

However, in the prior art, in a process of scheduling data resources for the JBOD, there are problems of low scheduling efficiency and poor reliability.

### SUMMARY

The embodiments of the present disclosure provide a method, an apparatus, a system, a device and a storage medium for scheduling a resource for JBOD to overcome the problems of low scheduling efficiency and poor reliability in the process of scheduling the JBOD data resources.

In a first aspect, an embodiment of the present disclosure provides a method for scheduling a resource for Just a Bunch of Disks (JBOD) which is applied in a data storage system. The data storage system is deployed with a control and scheduling service node and at least one dual-head storage service node group, and the dual-head storage service node group comprises two storage service nodes adjacently deployed. The method comprises: acquiring, by the control and scheduling service node, attribution data of the JBOD, wherein the attribution data of the JBOD represents a mapping relationship between at least one JBOD and a storage service node to which the at least one JBOD belongs; and detecting, by the control and scheduling service node, an abnormal storage service node in the dual-head storage service node group, and scheduling, by the control and scheduling service node, a JBOD mounted on the abnormal storage service node to a normal storage service node in the dual-head storage service node group based on the attribution data of the JBOD.

In a second aspect, an embodiment of the present disclosure provides an apparatus for scheduling a resource for Just a Bunch of Disks (JBOD) which is applied in a data storage system. The data storage system is deployed with a control and scheduling service node and at least one dual-head storage service node group, and the dual-head storage service node group comprises two storage service nodes adjacently deployed. The apparatus comprises: a data module configured to acquire, by the control and scheduling service node, attribution data of the JBOD, wherein the attribution data of the JBOD represents a mapping relationship between at least one JBOD and a storage service node to which the at least one JBOD belongs; and a scheduling module configured to detect, by the control and scheduling service node, an abnormal storage service node in the dual-head storage service node group, and schedule, by the control and scheduling service node, a JBOD mounted on the abnormal storage service node to a normal storage service node in the dual-head storage service node group based on the attribution data of the JBOD.

In a third aspect, an embodiment of the present disclosure provides a data storage system. The data storage system is deployed with a control and scheduling service node and at least one dual-head storage service node group, and the dual-head storage service node group comprises two storage service nodes adjacently deployed. The control and scheduling service node is configured to acquire attribution data of the JBOD, wherein the attribution data of the JBOD represents a mapping relationship between at least one JBOD and a storage service node to which the at least one JBOD belongs; and the control and scheduling service node is further configured to detect an abnormal storage service node in the dual-head storage service node group, and schedule a JBOD mounted on the abnormal storage service node to a normal storage service node in the dual-head storage service node group based on the attribution data of the JBOD.

In a fourth aspect, an embodiment of the present disclosure provides an electronic device comprising a processor and a memory. Wherein the memory stores computer-executable instructions. The processor executes the computer-executable instructions stored in the memory to cause at lease one of the processor to execute the method for scheduling a resource for JBOD as described in the first aspect and various possible designs of the first aspect.

In a fourth aspect, an embodiment of the present disclosure provides computer-readable storage medium storing computer-executable instructions. Wherein the computer-executable instructions, when executed by a processor, implement the method for scheduling the resource for JBOD as described in the first aspect and various possible designs of the first aspect.

In a fifth aspect, an embodiment of the present disclosure provides a computer program product comprising a computer program. Wherein the computer program, when executed by a processor, implement the method for scheduling the resource for JBOD as described in the first aspect and various possible designs of the first aspect.

The method, apparatus, system, device and storage medium for scheduling the resource for the JBOD provided the embodiments of the present disclosure acquire the attribution data of the JBOD by the control and scheduling service node, wherein the attribution data of the JBOD represents a mapping relationship between at least one JBOD and a storage service node to which the at least one JBOD belongs; and detect an abnormal storage service node in the dual-head storage service node group by the control and scheduling service node, and schedule, by the control and scheduling service node, a JBOD mounted on the abnormal storage service node to a normal storage service node in the dual-head storage service node group based on the attribution data of the JBOD. The JBOD under the storage service nodes in the dual-head storage service node group are scheduled by an independently deployed control and scheduling service node. Thus, in an event of a single node failure in the dual-head storage service node group, the scheduling of the resources for the JBOD is quickly and reliably, avoiding a problem of poor reliability of storage services and low efficiency for scheduling caused by the misalignment of the JBODs mounted on the two storage service nodes due to the single node failure or inability to communicate.

### BRIEF DESCRIPTION OF THE DRAWINGS

In order to more clearly illustrate the embodiments of the present disclosure or the technical solutions in the prior art, the drawings required for use in the embodiments or the description of the prior art will be briefly introduced below. Obviously, the drawings described below are some embodiments of the present disclosure. For ordinary technicians in this field, other drawings can be obtained based on these drawings without paying creative labor.
FIG. 1 is a diagram of an application scenario of a method for scheduling a resource for JBOD provided by an embodiment of the present disclosure;
FIG. 2 is a flow chart of a method for scheduling a resource for JBOD provided by an embodiment of the present disclosure;
FIG. 3 is a schematic diagram of an architecture of a first data storage system provided by an embodiment of the present disclosure;
FIG. 4 is a flow chart of an implementation of step S 102 in an embodiment shown in FIG. 2;
FIG. 5 is a second flow chart of a method for scheduling a resource for JBOD provided by an embodiment of the present disclosure;
FIG. 6 is a flowchart of an implementation of step S207 in the embodiment shown in FIG. 5;
FIG. 7 is a schematic diagram of a process for scheduling a resource for JBOD provided by an embodiment of the present disclosure;
FIG. 8 is a structural block diagram of an apparatus for scheduling a resource for JBOD provided by an embodiment of the present disclosure;
FIG. 9 is a schematic diagram of a data storage system provided by an embodiment of the present disclosure;
FIG. 10 is a structural block diagram of an electronic device provided by an embodiment of the present disclosure;
FIG. 11 is a hardware structural schematic diagram of an electronic device provided in an embodiment of the present disclosure.

### DETAILED DESCRIPTION OF EMBODIMENTS

In order to make the purpose, technical solution and advantages of the embodiments of the present disclosure clearer, the technical solution in the embodiments of the present disclosure will be clearly and completely described below in conjunction with the drawings in the embodiments of the present disclosure. Obviously, the described embodiments are part of the embodiments of the present disclosure, not all of the embodiments. Based on the embodiments in the present disclosure, all other embodiments obtained by ordinary technicians in this field without creative work are within the scope of protection of the present disclosure.

It should be noted that the user information (including but not limited to user device information, user personal information, etc.) and data (including but not limited to data used for analysis, stored data, displayed data, etc.) involved in this disclosure are all information and data authorized by the user or fully authorized by all parties. The collection, use and processing of relevant data must comply with the relevant laws, regulations and standards of relevant countries and regions, and corresponding operation entrances for users to choose to authorize or refuse are provided.

The application scenarios of the embodiments of the present disclosure are explained below.

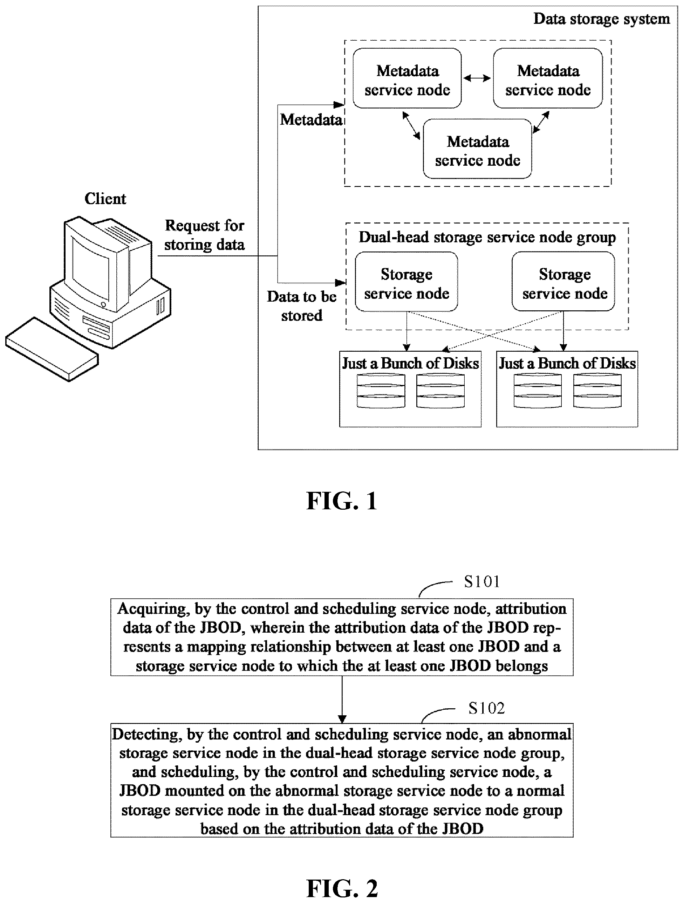

FIG. 1 is a diagram of an application scenario of a method for scheduling a resource for JBOD provided by an embodiment of the present disclosure. The method for scheduling the resource for the JBOD provided by the embodiment of the present disclosure can be applied to the application scenario of the data storage, especially to the application scenario of the data storage for cold data such as low-frequency cold storage and archival storage. The execution subject of the embodiment can be a control device, a data server, or other electronic devices that perform similar functions in a data storage system.

In some embodiments, the terminal device or server can implement the method for scheduling the resource for the JBOD provided in the embodiment of the present application by running various computer executable instructions or computer programs. For example, computer executable instructions can be program-level commands, machine instructions or software instructions. The computer program can be a native program or software module in the operating system. The computer program also can be a local application, that is, a program that needs to be installed in the operating system to run. The above-mentioned computer executable instructions can be instructions in any form, and the above-mentioned computer program can be an application, module or plug-in in any form, and the specific implementation form can be configured as needed. Furthermore, in some embodiments, the server may be an independent physical server, or a server cluster or distributed system composed of multiple physical servers, or a cloud server that provides basic cloud computing services such as cloud services, cloud storage, cloud communications, cloud databases, cloud computing, cloud functions, network services, middleware services, domain name services, security services, content delivery networks (CDNs), and big data and artificial intelligence platforms, wherein the cloud service can be an interactive processing service for terminal devices to call.

As shown in FIG. 1, exemplarily, after receiving a request for storing data sent by a client, the data storage system, on one hand, generates metadata of the data to be stored, i.e., the relevant description information of the data to be stored, and stores it by multiple metadata service nodes to form a consistency algorithm group (raft group) to ensure high availability of the primary and secondary elements. The data storage system mounts, on the other hand, by the storage service node, the JBOD consisting of multiple disk drives, and stores the data to be stored in the corresponding JBOD to realize storage of the original data of the data to be stored. In the system, every two storage service nodes form a dual-head storage service node group, and the storage service node in the storage service node group can call the local JBOD (i.e., the JBOD mounted by the storage service node itself) or the remote JBOD (i.e., the JBOD mounted by another storage service node in the storage service node group), thereby realizing the primary and secondary storage mode. When one of the storage service nodes fails, the other storage service node continues to provide read and write services for the data. That is the dual-head data storage system.

In the prior art, the multiple disk drives are combined into a disk array (JBOD) based on a storage architecture of the JBOD, thereby achieving the low-cost data storage. At the same time, two (or more) JBODs are mounted on the same storage service node for managing and scheduling, forming a dual (multi) head data storage system, which can achieve high availability of the data storage service. However, in the related art, in the dual-head data storage system, the mapping relationship between the storage service node and the JBOD is recorded in the storage service node. When a storage service node fails or becomes abnormal, the JBOD mounted on the other storage service node will change. In this case, the mapping information of the JBODs stored in the two storage service nodes will be inconsistent, resulting in errors, or requiring for resynchronization and calibration before data reading and writing can be performed normally, resulting in low scheduling efficiency and poor reliability.

The embodiments of the present provide a method for scheduling a resource for JBOD to solve the above problems.

Referring to FIG. 2, FIG. 2 is a flow chart of a method for scheduling a resource for JBOD provided by an embodiment of the present disclosure. The method of the embodiment can be applied to a data storage system, wherein the data storage system is deployed with a control and scheduling service node and at least one dual-head storage service node group, and the dual-head storage service node group comprises two storage service nodes adjacently deployed. The method for scheduling the resource for JBOD includes Step S101 and Step S102.

Step S101: Acquiring, by the control and scheduling service node, attribution data of the JBOD, wherein the attribution data of the JBOD represents a mapping relationship between at least one JBOD and a storage service node to which the at least one JBOD belongs.

Step S102: Detecting, by the control and scheduling service node, an abnormal storage service node in the dual-head storage service node group, and scheduling, by the control and scheduling service node, a JBOD mounted on the abnormal storage service node to a normal storage service node in the dual-head storage service node group based on the attribution data of the JBOD.

Referring to the diagram of the application scenario shown in FIG. 1, the solution provided in the embodiment is applied to the data storage system, specifically, to the dual-head data storage service system, that is, a data storage system based on the dual-head storage service node group for peer-to-peer data storage. After the data storage system is started, the control and scheduling service node and multiple storage service nodes will be created. Wherein the control and scheduling service node is a storage service. More specifically, after the control and scheduling service node is created, it will be maintained in the memory, and the corresponding scheduling tasks will be executed by the control and scheduling service node. The specific execution process will be described in detail in subsequent steps. The dual-head storage service node group is a logical group composed of two storage service nodes, and the two data storage nodes in the dual-head storage service node group serve as each other's backup, thereby achieving high availability of the data storage system. The control and scheduling service node can communicate with the dual-head storage service node group, thereby realizing the scheduling of the resource for the JBOD mounted on the storage service node in the dual-head storage service node group.

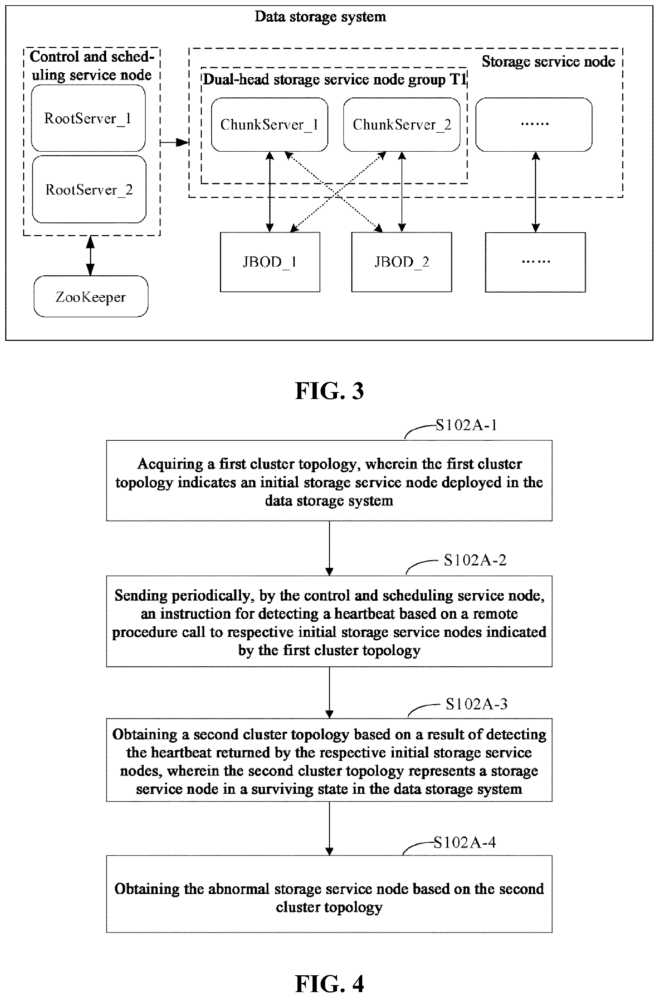

FIG. 3 is a schematic diagram of the architecture of a first data storage system provided in an embodiment of the present disclosure. As shown in FIG. 3, after the data storage system is started, a control and scheduling service node RootServer and multiple storage service nodes ChunkServer are created. In one implementation, the control and scheduling service node includes a primary control and scheduling service node RootServer_1 and a secondary control and scheduling service node RootServer_2 (shown as RootServer_1 and RootServer_2 in the figure) which serve as each other's backup. The primary control and scheduling service node and the secondary control and scheduling service node are encapsulated based on a distributed coordination service (such as a ZooKeeper service), thereby achieving the high availability for the two primary and secondary control and scheduling service nodes, and further improving the reliability of the data storage system.

On the other hand, for multiple storage service nodes in the data storage system, every two storage service nodes logically constitute the dual-head storage service node group to achieve highly available data storage. Each of the storage service nodes corresponds to one local JBOD. Taking the dual-head storage service node group T1 shown in the figure as an example, the dual-head storage service node group T1 includes storage service node ChunkServer_1 and storage service node ChunkServer_2 (shown as ChunkServer_1 and ChunkServer_2 in the figure). The local JBOD corresponding to the storage service node ChunkServer_1 is the JBOD_1 (shown as JBOD_1 in the figure), and the local JBOD corresponding to the storage service node ChunkServer_2 is the JBOD_2 (shown as JBOD_2 in the figure). Correspondingly, the remote JBOD corresponding to the storage service node ChunkServer_1 is the JBOD_2, and the remote JBOD corresponding to the storage service node ChunkServer_2 is the JBOD_1. The above situation can be described as following. The storage service node ChunkServer_1 mounts with the JBOD_1, the storage service node ChunkServer_2 mounts with the JBOD_2. Alternatively, the JBOD_1 belongs to the storage service node ChunkServer_l, and the JBOD_2 belongs to the storage service node ChunkServer_2.

Furthermore, the storage service node ChunkServer_1 and storage service node ChunkServer_2 mentioned above can run independently and serve as each other's backup. Specifically, when the storage service node ChunkServer_1 and the storage service node ChunkServer_2 both operates normally, the two manage the mounted JBODs respectively and write data to the JBOD, so as to achieve the effect of providing data storage services to the outside. When either of the two storage service nodes is abnormal, for example, when the storage service node ChunkServer_1 is abnormal, the JBOD_1 belonging to the storage service node ChunkServer_1 is mounted on the storage service node ChunkServer_2 through logical scheduling, so that the storage service node ChunkServer_2 can access the JBOD_1, thereby ensuring the high availability of the system. In the embodiment, the above-mentioned steps of the scheduling are performed by the control and scheduling service node.

Based on the above data storage system, exemplarily, first, the control and scheduling service node in the data storage system will periodically acquire the attribution data of the JBOD. The attribution data of the JBOD represents the mapping relationship between at least one JBOD and the storage service node to which the at least one JBOD belongs. For example, in the above example, the mapping relationship between the storage service node ChunkServer_1 and the JBOD_1, and the mapping relationship between the storage service node ChunkServer_2 and the JBOD_2 are all the contents of the attribution data of the JBOD. In an implementation, the attribution data of the JBOD is pre-loaded in the control and scheduling service node (i.e., memory). Then the control and scheduling service node will periodically detect whether the respective storage service nodes are abnormal, such as loss of communication, abnormal response, inability to execute normal read and write instructions, etc., that is, detect the abnormal storage service node. When the control and scheduling service node detects the abnormal storage service node, the resource for the abnormal storage service node is scheduled based on the dual-head storage service node group which includes the abnormal storage service node, that is, the JBOD mounted on the abnormal storage service node is scheduled to another normal storage service node in the dual-head storage service node group which includes the abnormal storage service node.

In an implementation, as shown in FIG. 4, the specific implementation steps of the detecting, by the control and scheduling service node, the abnormal storage service node in the dual-head storage service node group in step S102 includes Step S102A-1 to Step S102A-4.

Step S102A-1: Acquiring a first cluster topology, wherein the first cluster topology indicates an initial storage service node deployed in the data storage system.

Step S102A-2: Sending periodically, by the control and scheduling service node, an instruction for detecting a heartbeat based on a remote procedure call to respective initial storage service nodes indicated by the first cluster topology.

Step S102A-3: Obtaining a second cluster topology based on a result of detecting the heartbeat returned by the respective initial storage service nodes, wherein the second cluster topology represents a storage service node in a surviving state in the data storage system.

Step S 102A-4: Obtaining the abnormal storage service node based on the second cluster topology.

Exemplarily, the cluster topology is the data describing the storage service nodes deployed in the data storage system. The control and scheduling service node determines the storage service node in the data storage system based on the cluster topology, and detects the availability for the storage service node, that is, detects whether the storage service node is abnormal (whether it is the abnormal storage service node). The first cluster topology is data indicating the initial storage service node deployed in the data storage system, for example, the node identifiers of all storage service nodes deployed in the data storage system. Correspondingly, the second cluster topology indicates the storage service node that is in a surviving state in the data storage system after the detection on the availability. Specifically, for the process of the detection on the availability, the instruction for detecting the heartbeat based on a remote procedure call (RPC) is periodically sent to the respective initial storage service nodes indicated by the first cluster topology by the control and scheduling service node. Then, based on the result of detecting the heartbeat returned by the respective initial storage service nodes, it is determined whether the respective initial storage service nodes are operating normally. Thus, the storage service node that is in the surviving state (i.e., the normal storage service node) in the data storage system is determined. Alternatively, the storage service node that is in the non-surviving state (i.e., the abnormal storage service node) in the data storage system is determined. Afterwards, based on the specific implementation form of the second cluster topology, for example, when the second cluster topology only records the node identifier of the storage service node in the available state, the abnormal storage service node can be obtained by further comparing the difference between the second cluster topology and the first cluster topology. For another example, when the second cluster topology records the node identifier of the initial storage service node, as well as the node identifier of the normal storage service node or the abnormal storage service node, the abnormal storage service node can be obtained directly based on the second cluster topology.

Afterwards, based on the dual-head storage service node group to which the abnormal storage service node belongs, another normal storage service node in the dual-head storage service node group is located. The JBOD is added to the normal storage service node. Thus, the JBOD mounted on the abnormal storage service node is scheduled to the normal storage service node in the dual-head storage service node group.

In the embodiment, the attribution data of the JBOD is acquired by the control and scheduling service node. Wherein the attribution data of the JBOD represents the mapping relationship between the at least one JBOD and the storage service node to which the at least one JBOD belongs. An abnormal storage service node in the dual-head storage service node group is detected by the control and scheduling service node. A JBOD mounted on the abnormal storage service node is scheduled, by the control and scheduling service node, to a normal storage service node in the dual-head storage service node group based on the attribution data of the JBOD. The JBOD under the storage service nodes in the dual-head storage service node group are scheduled by an independently deployed control and scheduling service node. Thus, in an event of a single node failure in the dual-head storage service node group, the scheduling of the resources for the JBOD is quickly and reliably, avoiding a problem of poor reliability of storage services and low efficiency for scheduling caused by the misalignment of the JBODs mounted on the two storage service nodes due to the single node failure or inability to communicate.

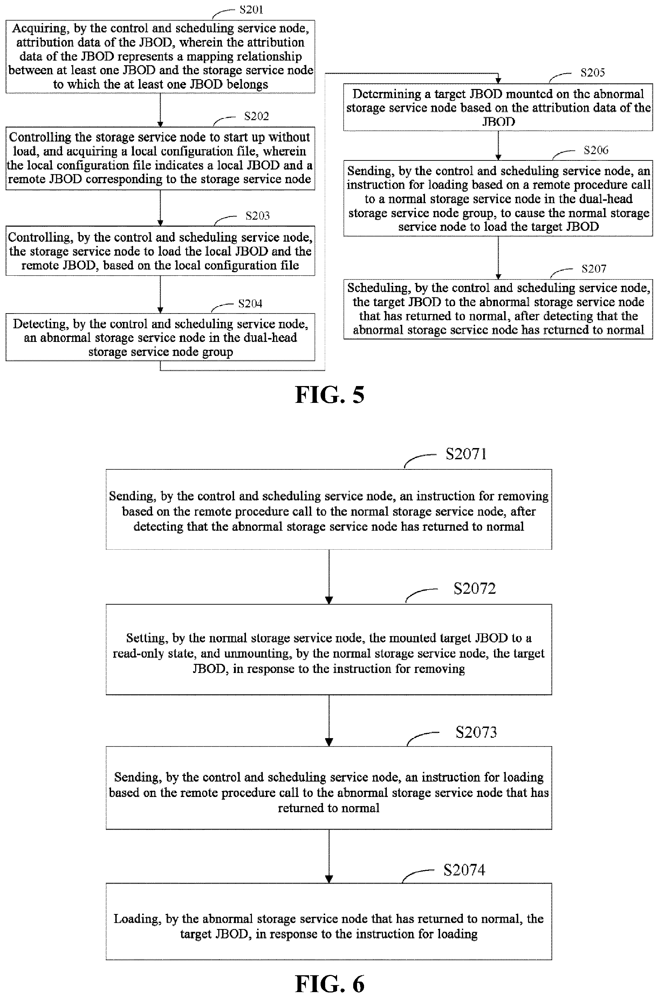

Referring to FIG. 5, FIG. 5 is a second flow chart of the method for scheduling the resource for JBOD provided by an embodiment of the present disclosure. Based on the embodiment shown in FIG. 2, this embodiment further refines step S102 and adds an initialization process for the storage service node. The method for scheduling the resource for the JBOD may include Step S201 to Step S207.

Step S201: Acquiring, by the control and scheduling service node, attribution data of the JBOD, wherein the attribution data of the JBOD represents a mapping relationship between at least one JBOD and a storage service node to which the at least one JBOD belongs.

Step S202: Controlling the storage service node to start up without load, and acquiring a local configuration file, wherein the local configuration file indicates a local JBOD and a remote JBOD corresponding to the storage service node.

Step S203: Controlling, by the control and scheduling service node, the storage service node to load the local JBOD and the remote JBOD, based on the local configuration file.

Exemplarily, the JBOD includes a local JBOD and a remote JBOD. The local JBOD is a JBOD mounted on a storage service node which operates normally, and the remote JBOD is a JBOD mounted on a storage service node in a case that another storage service node of a dual-head storage service node group including the storage service node is abnormal. As a storage engine, the storage service node provides read and write services for the data to the outside. Therefore, before the storage service node normally provides the read and write services for the data, it needs to load the corresponding disk, that is, load the corresponding JBOD. In the prior art, the mapping relationship between the JBOD and the storage service node to which the JBOD belongs (that is, the attribution data of the JBOD) is written in the control and scheduling service node. When the storage service node is started, it will be started with load, that is, when the storage service node is started, the corresponding JBOD (disk drive) is loaded. In this way, when the storage service node is restored after a failure, the attribution data of the JBOD recorded in the two storage service nodes in the dual-head storage service node group will be out of sync, resulting in an additional step for synchronizing the attribution data of the JBOD, affecting system stability and operation efficiency.

In this embodiment, in response to a startup of the storage service node, including the first startup after the storage service is created, and the startup after a failure and its recovery, no-load startup is adopted. That is, when the storage service node is started, the JBOD (disk drive) is not loaded, but only the local configuration file is obtained. The local configuration file is used to indicate the local JBOD and remote JBOD corresponding to the storage service node, that is, the JBOD mounted on the storage service node, and the JBOD mounted on another storage service node in the same dual-head storage service node group. Afterwards, by the control and scheduling service node, the storage service node is controlled to load the local JBOD and the remote disk based on the local configuration file. Exemplarily, the specific implementation of step S203 includes: registering, by the control and scheduling service node, the storage service node with the control and scheduling service node by performing an instruction for registering based on a remote procedure call; and sending, by the control and scheduling service node, an instruction for loading based on a remote procedure call to the storage service node based on the local configuration file, to cause the storage service node to load a corresponding local JBOD and a corresponding remote JBOD. Exemplarily, by performing the instruction for registering based on the remote procedure call, the storage service node is registered with the control and scheduling service node, that is, the cluster topology is updated. After the storage service node is successfully registered, the instruction for loading based on a remote procedure call is sent to the storage service node, the basic necessary resource (such as background threads, memory pools, RPC services, etc.) and mount files of the respective disks corresponding to the JBOD are recorded. Thus, the loading of the JBOD corresponding to the storage service node is completed, that is, the initialization startup process of the storage service node is completed.

Exemplarily, the control and scheduling service node stores the attribution data of the JBOD and the cluster topology. Wherein the cluster topology is used to indicate the storage service node in the data storage system, and the attribution data of the JBOD is used to indicate the JBOD corresponding to the respective storage service nodes. The control and scheduling service node determines the JBOD corresponding to the respective storage service nodes based on the cluster topology and the attribution data of the JBOD, and registers it. After registration, the instruction for loading based on the remote procedure call is sent to the storage service node to complete the loading of the JBOD. Since the loading process of the JBOD is completed by the control and scheduling service node, the asynchronous problem of the attribution data of the JBOD can be avoided, thereby realizing fast and reliable scheduling of the resource for the JBOD.

Step S204: Detecting, by the control and scheduling service node, an abnormal storage service node in the dual-head storage service node group.

Step S205: Determining a target JBOD mounted on the abnormal storage service node based on the attribution data of the JBOD.

Step S206: Sending, by the control and scheduling service node, an instruction for loading based on a remote procedure call to a normal storage service node in the dual-head storage service node group to cause the normal storage service node to load the target JBOD.

Exemplarily, further, after the storage service node in the data storage system is started, the control and scheduling service node will periodically detect the abnormal storage service node (step S205). The specific implementation has been introduced in the embodiment shown in FIG. 2 and will not be repeated here. After the control and scheduling service node detects the abnormal storage service node, in a possible implementation, the cluster topology (for example, the first cluster topology) recorded in the control and scheduling service node (memory) records the logical grouping information of the respective dual-head storage service node groups. For example, a storage service node A and a storage service node B belong to a dual-head storage service node group # 1, and a storage service node C and a storage service node D belong to a dual-head storage service node group # 2, and so on. Based on the above cluster topology, the control and scheduling service node can determine the dual-head storage service node group to which the abnormal storage service node belongs, as well as another storage service node in the dual-head storage service node group, that is, the normal storage service node. Afterwards, the control and scheduling service node determines the target JBOD mounted on the abnormal storage service node based on the attribution data of the JBOD, and sends the instruction for loading based on the remote procedure call (RPC) to the normal storage service node in the dual-head storage service node group, to instruct the normal storage service node to load the target JBOD, thereby completing the scheduling of the resource for the JBOD.

Optionally, after step S206, the method further includes:
Step S207: Scheduling, by the control and scheduling service node, the target JBOD to the abnormal storage service node that has returned to normal, after detecting that the abnormal storage service node has returned to normal.

Exemplarily, after the above steps in this embodiment, in the event of the abnormal storage service node appearing in the data storage system, another storage service node in the same dual-head storage service node group can continue to provide the read and write services for the data, thereby ensuring the operational stability and high availability of the data storage system. Afterwards, as the detection and modification mechanism for the abnormal storage service node in the data storage system takes effect, or the system operating load decreases, the above abnormal storage service node will be restored to a normal storage service node. After the above abnormal storage service node are restored to the normal storage service node, the storage service node can continue to provide the read and write services for the data after the initialization step of the storage service node mentioned above. At this time, the control and scheduling service node will schedule the JBOD, which is previously removed from the abnormal storage service node, back to that storage service node, thereby improving load balancing.

Exemplarily, as shown in FIG. 6, the specific implementation of step S207 includes:
Step S2071: Sending, by the control and scheduling service node, an instruction for removing based on a remote procedure call to the normal storage service node, after detecting that the abnormal storage service node has returned to normal;
Step S2072: Setting, by the normal storage service node, the mounted target JBOD to a read-only state, and unmounting, by the normal storage service node, the target JBOD, in response to the instruction for removing;
Step S2073: Sending, by the control and scheduling service node, an instruction for loading based on a remote procedure call to the abnormal storage service node that has returned to normal;
Step S2074: Loading, by the abnormal storage service node that has returned to normal, the target JBOD, in response to the instruction for loading.

Exemplarily, the control and scheduling service node detects the available status of the respective initial storage service nodes by periodically sending the instruction for detecting the heartbeat to the initial storage service node indicated by the first cluster topology. After detecting that the abnormal storage service node has returned to normal, it first sends the instruction for removing based on the remote procedure call to the normal storage service node in the same dual-head storage service node group as the abnormal storage service node. Wherein the specific implementation of determining the dual-head storage service node group which includes the abnormal storage service node, and another storage service node (i.e., the normal storage service node) in the dual-head storage service node has been introduced in steps of the previous embodiment and will not be repeated here. Afterwards, the normal storage service node responds to the instruction for removing, sets the target JBOD to a read-only state, and unloads the target JBOD. The purpose of setting the target JBOD to the read-only state is to lock the metadata of the target JBOD to avoid the problem of metadata inconsistency caused by continuous writing of data during the scheduling of the JBOD. Afterwards, the target JBOD is unloaded from the normal storage service node. Afterwards, by the control and scheduling service node, the instruction for loading based on the remote procedure call is sent to the abnormal storage service node that has returned to normal, and the abnormal storage service node that has returned to normal will respond to the instruction for loading and load the target JBOD. This process is similar to the normal initialization and startup process of the storage service node, and will not be repeated here.

Furthermore, after step S2072, the method further includes:
Step S2072A: Generating, by the control and scheduling service node, checkpoint information of metadata corresponding to original data stored in the target JBOD, wherein the checkpoint information represents a storage location of the original data.

Step S 2072B: Writing the checkpoint information into the target JBOD.

Exemplarily, after setting the mounted target JBOD to the read-only status, the control and scheduling service node will simultaneously generate the checkpoint (CheckPoint) information of the metadata corresponding to the original data stored in the target JBOD. And the checkpoint information is used to represent the storage location of the original data. And the checkpoint information is written to the corresponding target JBOD to complete the recording and updating of the corresponding metadata. By the above steps, the target JBOD (disk drive therein) can be quickly loaded in the subsequent steps, improving the efficiency of the loading of the JBOD.

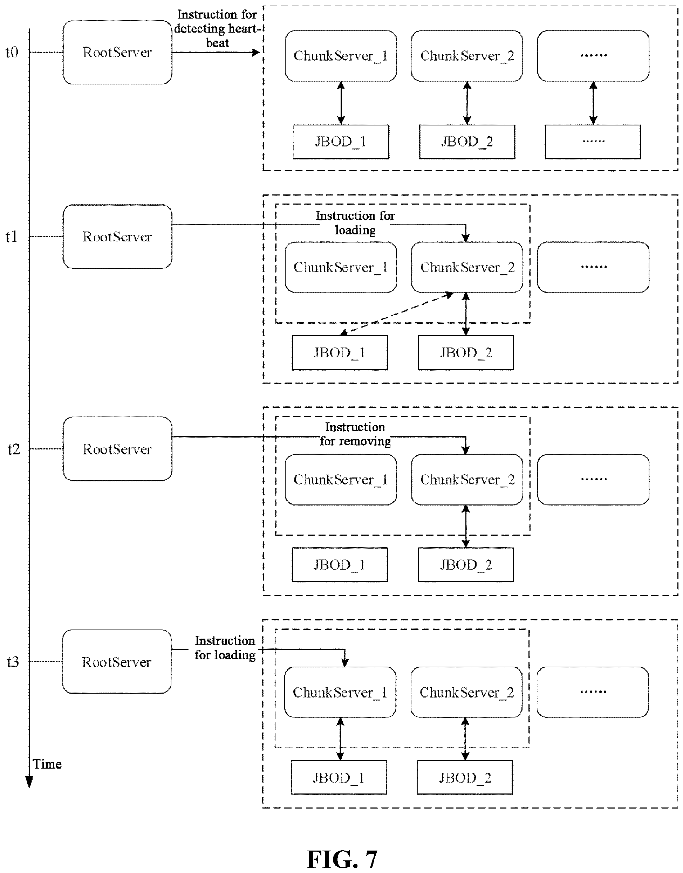

FIG. 7 is a schematic diagram of a process for scheduling a resource for JBOD provided by an embodiment of the present disclosure. The steps of the above embodiment are further introduced below in conjunction with FIG. 7. As shown in FIG. 7, exemplarily, first, the control and scheduling service node (shown as RootServer in the figure) periodically sends the instruction for detecting the heartbeat to the respective storage service nodes in the data storage system (such as ChunkServer_1 and ChunkServer_2 shown in the figure) based on the cluster topology (i.e., the data indicating the storage service nodes deployed in the data storage system) to determine the available status of the storage service node (such as at time to shown in the figure). When an abnormal storage service node, such as ChunkServer_1 shown in the figure, is detected as the abnormal storage service node, the control and scheduling service node sends the instruction for loading to the storage service node (such as ChunkServer_2 shown in the figure) belonging to the same dual-head storage service node group. Thus, the JBOD_1 mounted on ChunkServer_1 is scheduled to ChunkServer_2. At this time, the JBOD_1 and the JBOD_2 are mounted on ChunkServer_2 at the same time (such as at time t1 shown in the figure). Afterwards, when it is detected that the abnormal storage service node ChunkServer_1 has returned to normal, the control and scheduling service node first sends the instruction for removing to ChunkServer_2 (for example, at time t2 shown in the figure). And then the control and scheduling service node sends the instruction for loading to ChunkServer_1 to re- schedule JBOD_1 from ChunkServer_2 to ChunkServer_1 (for example, at time t3 shown in the figure). Thus, the scheduling process of the resource for the JBOD is completed.

In the embodiment, the JBOD of the storage service nodes in the dual-head storage service node group are scheduled by an independently deployed control and scheduling service node. Thus, in the event of a single node failure in the dual-head storage service node group, the scheduling of the resources for the JBOD is quickly and reliably. After the failed storage service node is restored, the resource for the JBOD can be quickly and reliably scheduled back to the original storage service node. Thereby achieving load balancing for the system and improving the reliability and stability of the data storage system.

In the embodiment, the implementation of step S201 is the same as the implementation of step S101 in the embodiment shown in FIG. 2 of the present disclosure, and will not be described in detail here.

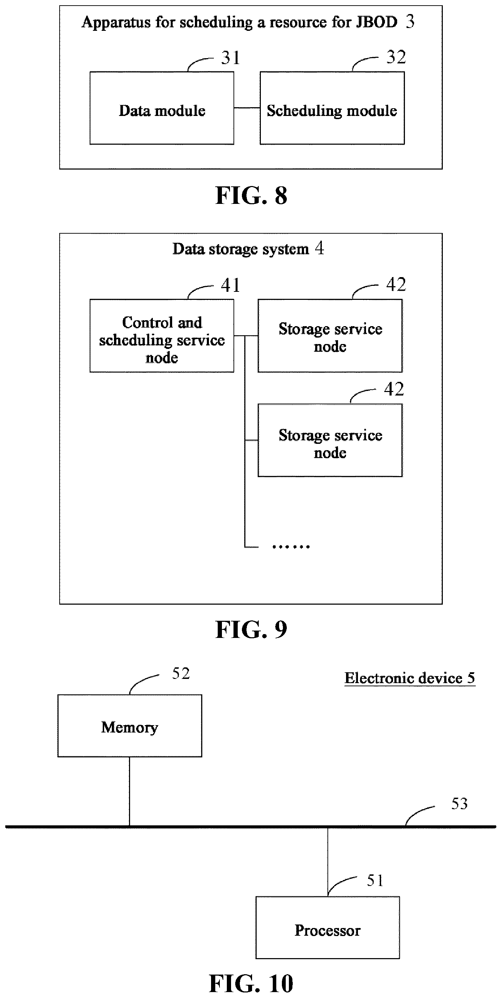

Corresponding to the method for scheduling the resource for the JBOD in the above embodiment, FIG. 8 is a structural block diagram of an apparatus for scheduling a resource for JBOD provided by an embodiment of the present disclosure. Among them, the apparatus 3 for scheduling the resource for the JBOD is applied to a data storage system. The data storage system is deployed with a control and scheduling service node and at least one dual-head storage service node group. And the dual-head storage service node group includes two storage service nodes adjacently deployed. The method introduced in the above embodiment can be executed by the apparatus 3 for scheduling the resource for the JBOD. The apparatus can be implemented by software and/or hardware. The apparatus can be integrated in an electronic device with certain data processing functions. The electronic device can include but is not limited to mobile terminals with big data processing capabilities, as well as fixed terminals with big data processing capabilities such as desktop computers and supercomputers.

For ease of explanation, only the parts related to the embodiment of the present disclosure are shown. Referring to FIG. 8, the apparatus 3 for scheduling the resource for the JBOD includes a data module 31 and a scheduling module 32.

A data module 31 is configured to acquire, by the control and scheduling service node, attribution data of the JBOD. Wherein the attribution data of the JBOD represents a mapping relationship between at least one JBOD and a storage service node to which the at least one JBOD belongs.

A scheduling module 32 is configured to detect, by the control and scheduling service node, an abnormal storage service node in the dual-head storage service node group, and schedule, by the control and scheduling service node, a JBOD mounted on the abnormal storage service node to a normal storage service node in the dual-head storage service node group based on the attribution data of the JBOD.

According to one or more embodiments of the present disclosure, the scheduling module 32 is configured to, when detecting, by the control and scheduling service node, the abnormal storage service node in the dual-head storage service node group, perform the following: acquiring a first cluster topology, wherein the first cluster topology indicates an initial storage service node deployed in the data storage system; sending periodically, by the control and scheduling service node, an instruction for detecting a heartbeat based on a remote procedure call to respective initial storage service nodes indicated by the first cluster topology; obtaining a second cluster topology based on a result of detecting the heartbeat returned by the respective initial storage service nodes, wherein the second cluster topology represents a storage service node in a surviving state in the data storage system; and obtaining the abnormal storage service node based on the second cluster topology.

According to one or more embodiments of the present disclosure, the scheduling module 32 is configured to, when scheduling the JBOD mounted on the abnormal storage service node to the normal storage service node in the dual-head storage service node group based on the attribution data of the JBOD, perform the following: determining target JBOD mounted on the abnormal storage service node based on the attribution data of the JBOD; and sending, by the control and scheduling service node, an instruction for loading based on a remote procedure call to a normal storage service node in the dual-head storage service node group to cause the normal storage service node to load the target JBOD.

According to one or more embodiments of the present disclosure, the scheduling module 32 is further configured to perform the following: sending, by the control and scheduling service node, an instruction for removing based on a remote procedure call to the normal storage service node, after detecting that the abnormal storage service node has returned to normal; setting, by the normal storage service node, the mounted target JBOD to a read-only state, and unmounting, by the normal storage service node, the target JBOD, in response to the instruction for removing; sending, by the control and scheduling service node, an instruction for loading based on a remote procedure call to the abnormal storage service node that has returned to normal; and loading, by the abnormal storage service node that has returned to normal, the target JBOD, in response to the instruction for loading.

According to one or more embodiments of the present disclosure, the scheduling module 32 is configured to, after setting the mounted target JBOD to the read-only state, perform the following: generating, by the control and scheduling service node, checkpoint information of metadata corresponding to original data stored in the target JBOD, wherein the checkpoint information represents a storage location of the original data; and writing the checkpoint information into the target JBOD.

According to one or more embodiments of the present disclosure, the control and scheduling service node comprises a primary control and scheduling service node and a secondary control and scheduling service node that serve as each other's backup, and the primary control and scheduling service node and the secondary control and scheduling service node are encapsulated based on a distributed coordination service.

According to one or more embodiments of the present disclosure, the JBOD comprises a local JBOD and a remote JBOD, the local JBOD is a JBOD mounted on a storage service node which operates normally, and the remote JBOD is a JBOD mounted on a storage service node which is comprised in a dual-head storage service node group with another storage service node being abnormal. The scheduling module 32 is further configured to perform the following: controlling the storage service node to start up without load, and acquiring a local configuration file, wherein the local configuration file indicates a local JBOD and a remote JBOD corresponding to the storage service node; and controlling, by the control and scheduling service node, the storage service node to load the local JBOD and the remote JBOD, based on the local configuration file.

According to one or more embodiments of the present disclosure, the scheduling module 32 is configured to, when controlling, by the control and scheduling service node, the storage service node to load the local JBOD and the remote JBOD, based on the local configuration file, perform the following: registering, by the control and scheduling service node, the storage service node in the control and scheduling service node by performing an instruction for registering based on a remote procedure call; and sending, by the control and scheduling service node, an instruction for loading based on a remote procedure call to the storage service node based on the local configuration file, to cause the storage service node to load a corresponding local JBOD and a corresponding remote JBOD.

The data module 31 is connected to the scheduling module 32. The apparatus 3 for scheduling the resource for the JBOD provided in the embodiment can execute the technical solution of the above method embodiment, and its implementation principle and technical effect are similar, which will not be described in detail in this embodiment.

The embodiment of the present disclosure also provides a data storage system. FIG. 9 is a schematic diagram of the data storage system provided by the embodiment of the present disclosure. As shown in FIG. 9, the data storage system 4 is deployed with a control and scheduling service node 41 and at least one dual-head storage service node group. The dual-head storage service node group includes two storage service nodes 42 adjacently deployed. The control and scheduling service node 41 is configured to acquire attribution data of the JBOD. Wherein the attribution data of the JBOD represents a mapping relationship between at least one JBOD and a storage service node to which the at least one JBOD belongs. The control and scheduling service node 41 is also configured to detect an abnormal storage service node in the dual-head storage service node group, and schedule a JBOD mounted on the abnormal storage service node to a normal storage service node in the dual-head storage service node group based on the attribution data of the JBOD.

The data storage system provided in the embodiment can execute the technical solution of the above method embodiment, and its implementation principle and technical effect are similar, which will not be repeated in this embodiment.

FIG. 10 is a structural block diagram of an electronic device provided by an embodiment of the present disclosure. As shown in FIG. 10, the electronic device 5 includes a processor 51, and a memory 52 communicatively connected to the processor 51.

The memory 52 stores computer-executable instructions; and the processor 51 executes the computer execution instructions stored in the memory 52 to implement the method for scheduling the resource for the JBOD in the embodiments shown in FIG. 2 to FIG. 7.

Optionally, the processor 51 and the memory 52 are connected via a bus 53.

The relevant descriptions can be understood by referring to the relevant descriptions and effects corresponding to the steps in the embodiments corresponding to FIG. 2 to FIG. 7, and no further details will be given here.

An embodiment of the present disclosure provides a computer-readable storage medium, in which computer-executable instructions are stored. When the computer-executable instructions are executed by a processor causing to implement the method for scheduling the resource for the JBOD provided in any of the embodiments corresponding to FIG. 2 to FIG. 7 of the present disclosure.

An embodiment of the present disclosure provides a computer program product including a computer program. The computer program, when executed by a processor, implements the method for scheduling the resource for the JBOD provided in any of the embodiments corresponding to FIG. 2 to FIG. 7 of the present disclosure.

In order to implement the above embodiment, the embodiment of the present disclosure also provides an electronic device.

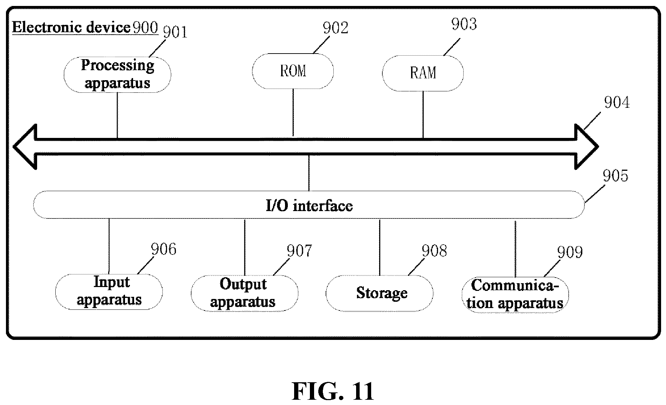

Referring to FIG. 11, it shows a schematic diagram of the structure of an electronic device 900 suitable for implementing the embodiments of the present disclosure. The electronic device 900 may be a terminal device or a server. The terminal device may include but is not limited to mobile terminals such as mobile phones, laptop computers, digital broadcast receivers, Personal Digital Assistants (PDAs), Portable Android Devices (PADs), Portable Media Players (PMPs), vehicle-mounted terminals (such as vehicle-mounted navigation terminals), etc., and fixed terminals such as digital TVs, desktop computers, etc. The electronic device shown in FIG. 13 is only an example and should not impose any limitations on the functions and scope of use of the embodiments of the present disclosure.

As shown in FIG. 11, the electronic device 900 may include a processing apparatus (e.g., a central processing unit, a graphics processing unit, etc.) 901, which may perform various appropriate actions and processes according to a program stored in a Read Only Memory (ROM) 902 or a program loaded from a storage 908 to a Random Access Memory (RAM) 903. Various programs and data required for the operation of the electronic device 900 are also stored in the RAM 903. The processing apparatus 901, the ROM 902, and the RAM 903 are connected to each other via a bus 904. An input/output (I/O) interface 905 is also connected to the bus 904.

Typically, the following apparatus may be connected to the I/O interface 905: input apparatus 906 including, for example, a touch screen, a touchpad, a keyboard, a mouse, a camera, a microphone, an accelerometer, a gyroscope, etc.; output apparatus 907 including, for example, a Liquid Crystal Display (LCD), a speaker, a vibrator, etc.; storage 908 including, for example, a magnetic tape, a hard disk, etc.; and communication apparatus 909. The communication apparatus 909 may allow the electronic device 900 to communicate with other devices wirelessly or by wire to exchange data. Although FIG. 11 shows the electronic device 900 with various apparatus, it should be understood that it is not required to implement or have all the apparatus shown. More or fewer apparatus may be implemented or have alternatively.

In particular, according to an embodiment of the present disclosure, the process described above with reference to the flowchart can be implemented as a computer software program. For example, an embodiment of the present disclosure includes a computer program product, which includes a computer program carried on a computer-readable medium, and the computer program contains program code for executing the method shown in the flowchart. In such an embodiment, the computer program can be downloaded and installed from a network by a communication apparatus 909, or installed from a storage 908, or installed from a ROM 902. When the computer program is executed by the processing apparatus 901, the above-mentioned functions defined in the method of the embodiment of the present disclosure are executed.

It should be noted that the computer-readable medium mentioned above in the present disclosure may be a computer-readable signal medium or a non-transitory computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. Computer readable signal media may also be any computer readable medium other than computer readable storage media, which may send, propagate or transmit a program for use by or in combination with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being installed in the electronic device.

The computer-readable medium carries one or more programs. When the one or more programs are executed by the electronic device, causing the electronic device to execute the method shown in the above embodiment.

Computer program code for performing the operations disclosed herein can be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In the case of a remote computer, the remote computer may be connected to the user's computer via any type of network, including a Local Area Network (LAN) or a Wide Area Network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each box in the flow chart or block diagram can represent a module, a program segment or a part of a code, and the module, the program segment or a part of the code contains one or more executable instructions for realizing the specified logical function. It should also be noted that in some implementations as replacements, the functions marked in the box can also occur in an order different from that marked in the accompanying drawings. For example, two boxes represented in succession can actually be executed substantially in parallel, and they can sometimes be executed in the opposite order, depending on the functions involved. It should also be noted that each box in the block diagram and/or flow chart, and the combination of the boxes in the block diagram and/or flow chart can be implemented with a dedicated hardware-based system that performs a specified function or operation, or can be implemented with a combination of dedicated hardware and computer instructions.

The units or module involved in the embodiments described in the present disclosure may be implemented by software or hardware. The name of the unit or module does not limit the unit itself in some cases.

The functions described above herein may be performed at least in part by one or more hardware logic components. For example, without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that may contain or store a program for use by or in conjunction with an instruction execution system, apparatus, or device. A machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. A more specific example of a machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

In a first aspect, according to one or more embodiments of the present disclosure, a method for scheduling a resource for Just a Bunch of Disks (JBOD) is provided. The method is applied to a data storage system, wherein the data storage system is deployed with a control and scheduling service node and at least one dual-head storage service node group, and the dual-head storage service node group comprises two storage service nodes adjacently deployed. The method comprises: acquiring, by the control and scheduling service node, attribution data of the JBOD, wherein the attribution data of the JBOD represents a mapping relationship between at least one JBOD and a storage service node to which the at least one JBOD belongs; and detecting, by the control and scheduling service node, an abnormal storage service node in the dual-head storage service node group, and scheduling, by the control and scheduling service node, a JBOD mounted on the abnormal storage service node to a normal storage service node in the dual-head storage service node group based on the attribution data of the JBOD.

According to one or more embodiments of the present disclosure, the detecting, by the control and scheduling service node, the abnormal storage service node in the dual-head storage service node group comprises: acquiring a first cluster topology, wherein the first cluster topology indicates an initial storage service node deployed in the data storage system; sending periodically, by the control and scheduling service node, an instruction for detecting a heartbeat based on a remote procedure call to respective initial storage service nodes indicated by the first cluster topology; obtaining a second cluster topology based on a result of detecting the heartbeat returned by the respective initial storage service nodes, wherein the second cluster topology represents a storage service node in a surviving state in the data storage system; and obtaining the abnormal storage service node based on the second cluster topology.

According to one or more embodiments of the present disclosure, the scheduling the JBOD mounted on the abnormal storage service node to the normal storage service node in the dual-head storage service node group based on the attribution data of the JBOD comprises: determining a target JBOD mounted on the abnormal storage service node based on the attribution data of the JBOD; and sending, by the control and scheduling service node, an instruction for loading based on a remote procedure call to a normal storage service node in the dual-head storage service node group, to cause the normal storage service node to load the target JBOD.

According to one or more embodiments of the present disclosure, the method further comprises: sending, by the control and scheduling service node, an instruction for removing based on the remote procedure call to the normal storage service node, after detecting that the abnormal storage service node has returned to normal; setting, by the normal storage service node, the mounted target JBOD to a read-only state, and unmounting, by the normal storage service node, the target JBOD, in response to the instruction for removing; sending, by the control and scheduling service node, an instruction for loading based on the remote procedure call to the abnormal storage service node that has returned to normal; and loading, by the abnormal storage service node that has returned to normal, the target JBOD, in response to the instruction for loading.

According to one or more embodiments of the present disclosure, the method further comprises: after setting the mounted target JBOD to the read-only state, generating, by the control and scheduling service node, checkpoint information of metadata corresponding to original data stored in the target JBOD, wherein the checkpoint information represents a storage location of the original data; and writing the checkpoint information into the target JBOD.

According to one or more embodiments of the present disclosure, the control and scheduling service node comprises a primary control and scheduling service node and a secondary control and scheduling service node that serve as each other's backup, and the primary control and scheduling service node and the secondary control and scheduling service node are encapsulated based on a distributed coordination service.

According to one or more embodiments of the present disclosure, the JBOD comprises a local JBOD and a remote JBOD, the local JBOD is a JBOD mounted on a storage service node which operates normally, and the remote JBOD is a JBOD mounted on a storage service node which is comprised in a dual-head storage service node group with another storage service node being abnormal, and the method further comprises: controlling the storage service node to start up without load, and acquiring a local configuration file, wherein the local configuration file indicates a local JBOD and a remote JBOD corresponding to the storage service node; and controlling, by the control and scheduling service node, the storage service node to load the local JBOD and the remote JBOD, based on the local configuration file.

According to one or more embodiments of the present disclosure, the controlling, by the control and scheduling service node, the storage service node to load the local JBOD and the remote JBOD, based on the local configuration file comprises: registering, by the control and scheduling service node, the storage service node in the control and scheduling service node by performing an instruction for registering based on a remote procedure call; and sending, by the control and scheduling service node, an instruction for loading based on the remote procedure call to the storage service node based on the local configuration file, to cause the storage service node to load a corresponding local JBOD and a corresponding remote JBOD.

In a second aspect, according to one or more embodiments of the present disclosure, an apparatus for scheduling a resource for Just a Bunch of Disks (JBOD) is provided. The apparatus is applied to a data storage system, wherein the data storage system is deployed with a control and scheduling service node and at least one dual-head storage service node group, and the dual-head storage service node group comprises two storage service nodes adjacently deployed. The apparatus comprises: a data module configured to acquire, by the control and scheduling service node, attribution data of the JBOD, wherein the attribution data of the JBOD represents a mapping relationship between at least one JBOD and a storage service node to which the at least one JBOD belongs; and a scheduling module configured to detect, by the control and scheduling service node, an abnormal storage service node in the dual-head storage service node group, and schedule, by the control and scheduling service node, a JBOD mounted on the abnormal storage service node to a normal storage service node in the dual-head storage service node group based on the attribution data of the JBOD.

According to one or more embodiments of the present disclosure, the scheduling module is configured to, when detecting, by the control and scheduling service node, the abnormal storage service node in the dual-head storage service node group, perform the following: acquiring a first cluster topology, wherein the first cluster topology indicates an initial storage service node deployed in the data storage system; sending periodically, by the control and scheduling service node, an instruction for detecting a heartbeat based on a remote procedure call to respective initial storage service nodes indicated by the first cluster topology; obtaining a second cluster topology based on a result of detecting the heartbeat returned by the respective initial storage service nodes, wherein the second cluster topology represents a storage service node in a surviving state in the data storage system; and obtaining the abnormal storage service node based on the second cluster topology.

According to one or more embodiments of the present disclosure, the scheduling module is configured to, when scheduling the JBOD mounted on the abnormal storage service node to the normal storage service node in the dual-head storage service node group based on the attribution data of the JBOD, perform the following: determining a target JBOD mounted on the abnormal storage service node based on the attribution data of the JBOD; and sending, by the control and scheduling service node, an instruction for loading based on a remote procedure call to a normal storage service node in the dual-head storage service node group to cause the normal storage service node to load the target JBOD.

According to one or more embodiments of the present disclosure, the scheduling module is further configured to perform the following: sending, by the control and scheduling service node, an instruction for removing based on a remote procedure call to the normal storage service node, after detecting that the abnormal storage service node has returned to normal; setting, by the normal storage service node, the mounted target JBOD to a read-only state, and unmounting, by the normal storage service node, the target JBOD, in response to the instruction for removing; sending, by the control and scheduling service node, an instruction for loading based on a remote procedure call to the abnormal storage service node that has returned to normal; and loading, by the abnormal storage service node that has returned to normal, the target JBOD, in response to the instruction for loading.

According to one or more embodiments of the present disclosure, the scheduling module is configured to, after setting the mounted target JBOD to the read-only state, perform the following: generating, by the control and scheduling service node, checkpoint information of metadata corresponding to original data stored in the target JBOD, wherein the checkpoint information represents a storage location of the original data; and writing the checkpoint information into the target JBOD.

According to one or more embodiments of the present disclosure, the control and scheduling service node comprises a primary control and scheduling service node and a secondary control and scheduling service node that serve as each other's backup, and the primary control and scheduling service node and the secondary control and scheduling service node are encapsulated based on a distributed coordination service.

According to one or more embodiments of the present disclosure, the JBOD comprises a local JBOD and a remote JBOD, the local JBOD is a JBOD mounted on a storage service node which operates normally, and the remote JBOD is a JBOD mounted on a storage service node which is comprised in a dual-head storage service node group with another storage service node being abnormal. The scheduling module is further configured to perform the following: controlling the storage service node to start up without load, and acquiring a local configuration file, wherein the local configuration file indicates a local JBOD and a remote JBOD corresponding to the storage service node; and controlling, by the control and scheduling service node, the storage service node to load the local JBOD and the remote JBOD, based on the local configuration file.

According to one or more embodiments of the present disclosure, the scheduling module is configured to, when controlling, by the control and scheduling service node, the storage service node to load the local JBOD and the remote JBOD, based on the local configuration file, perform the following: registering, by the control and scheduling service node, the storage service node in the control and scheduling service node by performing an instruction for registering based on a remote procedure call; and sending, by the control and scheduling service node, an instruction for loading based on a remote procedure call to the storage service node based on the local configuration file to cause the storage service node to load a corresponding local JBOD and a corresponding remote JBOD.

In a third aspect, according to one or more embodiments of the present disclosure, a data storage system is provided. The data storage system is deployed with a control and scheduling service node and at least one dual-head storage service node group, and the dual-head storage service node group comprises two storage service nodes adjacently deployed. The control and scheduling service node is configured to acquire attribution data of the JBOD, wherein the attribution data of the JBOD represents a mapping relationship between at least one JBOD and a storage service node to which the at least one JBOD belongs; and the control and scheduling service node is further configured to detect an abnormal storage service node in the dual-head storage service node group, and schedule a JBOD mounted on the abnormal storage service node to a normal storage service node in the dual-head storage service node group based on the attribution data of the JBOD.

In a fourth aspect, according to one or more embodiments of the present disclosure, an electronic device is provided. The electronic device comprises at least one processor and a memory. Wherein the memory stores computer-executable instructions. The at least one processor executes the computer-executable instructions stored in the memory to cause at lease one of the processor to execute the method for scheduling a resource for Just a Bunch of Disks (JBOD) as described in the first aspect and various possible designs of the first aspect.

In a fifth aspect, according to one or more embodiments of the present disclosure, a computer-readable storage medium is provided. Wherein the computer-executable instructions, when executed by a processor, implement the method for scheduling a resource for Just a Bunch of Disks (JBOD) as described in the first aspect and various possible designs of the first aspect.

In a sixth aspect, according to one or more embodiments of the present disclosure, a computer program product is provided. The computer program product comprises a computer program. Wherein the computer program, when executed by a processor, implement the method for scheduling a resource for Just a Bunch of Disks (JBOD) as described in the first aspect and various possible designs of the first aspect.

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, the above features are replaced with the technical features with similar functions disclosed in the present disclosure (but not limited to) by each other to form a technical solution.

In addition, although each operation is described in a specific order, this should not be understood as requiring these operations to be performed in the specific order shown or in a sequential order. Under certain circumstances, multitasking and parallel processing may be advantageous. Similarly, although some specific implementation details are included in the above discussion, these should not be interpreted as limiting the scope of the present disclosure. Some features described in the context of a separate embodiment can also be implemented in a single embodiment in combination. On the contrary, the various features described in the context of a single embodiment can also be implemented in a plurality of embodiments individually or in any suitable sub-combination mode.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method for scheduling a resource for Just a Bunch of Disks (JBOD) which is applied in a data storage system, wherein the data storage system is deployed with a control and scheduling service node and at least one dual-head storage service node group, the dual-head storage service node group comprises two storage service nodes adjacently deployed, and the method comprises:
acquiring (S101), by the control and scheduling service node, attribution data of the JBOD, wherein the attribution data of the JBOD represents a mapping relationship between at least one JBOD and a storage service node to which the at least one JBOD belongs; and
detecting (S102), by the control and scheduling service node, an abnormal storage service node in the dual-head storage service node group, and scheduling, by the control and scheduling service node, a JBOD mounted on the abnormal storage service node to a normal storage service node in the dual-head storage service node group based on the attribution data of the JBOD.

2. The method according to claim 1, wherein detecting, by the control and scheduling service node, the abnormal storage service node in the dual-head storage service node group comprises:
acquiring (S102A-1) a first cluster topology, wherein the first cluster topology indicates an initial storage service node deployed in the data storage system;
sending (S102A-2) periodically, by the control and scheduling service node, an instruction for detecting a heartbeat based on a remote procedure call to respective initial storage service nodes indicated by the first cluster topology;
obtaining (S102A-3) a second cluster topology based on a result of detecting the heartbeat returned by the respective initial storage service nodes, wherein the second cluster topology represents a storage service node in a surviving state in the data storage system; and
obtaining (S102A-4) the abnormal storage service node based on the second cluster topology.

3. The method according to claim 1 or 2, wherein scheduling the JBOD mounted on the abnormal storage service node to the normal storage service node in the dual-head storage service node group based on the attribution data of the JBOD comprises:
determining (S205) a target JBOD mounted on the abnormal storage service node based on the attribution data of the JBOD; and
sending (S206), by the control and scheduling service node, an instruction for loading based on a remote procedure call to a normal storage service node in the dual-head storage service node group, to cause the normal storage service node to load the target JBOD.

4. The method according to claim 3, further comprising:
sending (S2071), by the control and scheduling service node, an instruction for removing based on the remote procedure call to the normal storage service node, after detecting that the abnormal storage service node has returned to normal;
setting (S2072), by the normal storage service node, the mounted target JBOD to a read-only state, and unmounting, by the normal storage service node, the target JBOD, in response to the instruction for removing;
sending (S2073), by the control and scheduling service node, an instruction for loading based on the remote procedure call to the abnormal storage service node that has returned to normal; and
loading (S2074), by the abnormal storage service node that has returned to normal, the target JBOD, in response to the instruction for loading.

5. The method according to claim 4, further comprising: after setting the mounted target JBOD to the read-only state,
generating, by the control and scheduling service node, checkpoint information of metadata corresponding to original data stored in the target JBOD, wherein the checkpoint information represents a storage location of the original data; and
writing the checkpoint information into the target JBOD.

6. The method according to any of claims 1 to 5, wherein the control and scheduling service node comprises a primary control and scheduling service node and a secondary control and scheduling service node that serve as each other's backup, and the primary control and scheduling service node and the secondary control and scheduling service node are encapsulated based on a distributed coordination service.

7. The method according to any of claims 1 to 6, wherein the JBOD comprises a local JBOD and a remote JBOD, the local JBOD is a JBOD mounted on a storage service node which operates normally, and the remote JBOD is a JBOD mounted on a storage service node which is comprised in a dual-head storage service node group with another storage service node being abnormal.

8. The method according to claim 7, further comprising:
controlling (S202) the storage service node to start up without load, and acquiring a local configuration file, wherein the local configuration file indicates a local JBOD and a remote JBOD corresponding to the storage service node; and
controlling (S203), by the control and scheduling service node, the storage service node to load the local JBOD and the remote JBOD, based on the local configuration file.

9. The method according to claim 8, wherein controlling, by the control and scheduling service node, the storage service node to load the local JBOD and the remote JBOD, based on the local configuration file comprises:
registering, by the control and scheduling service node, the storage service node in the control and scheduling service node by performing an instruction for registering based on a remote procedure call; and
sending, by the control and scheduling service node, an instruction for loading based on the remote procedure call to the storage service node based on the local configuration file, to cause the storage service node to load a corresponding local JBOD and a corresponding remote JBOD.

10. An apparatus (3) for scheduling a resource for Just a Bunch of Disks (JBOD) which is applied in a data storage system, wherein the data storage system is deployed with a control and scheduling service node and at least one dual-head storage service node group, the dual-head storage service node group comprises two storage service nodes adjacently deployed, and the apparatus comprises:
a data module (S31) configured to acquire, by the control and scheduling service node, attribution data of the JBOD, wherein the attribution data of the JBOD represents a mapping relationship between at least one JBOD and a storage service node to which the at least one JBOD belongs; and
a scheduling module (S33) configured to detect, by the control and scheduling service node, an abnormal storage service node in the dual-head storage service node group, and schedule, by the control and scheduling service node, a JBOD mounted on the abnormal storage service node to a normal storage service node in the dual-head storage service node group based on the attribution data of the JBOD.

11. A data storage system (4), wherein the data storage system is deployed with a control and scheduling service node (41) and at least one dual-head storage service node group, and the dual-head storage service node group comprises two storage service nodes (42) adjacently deployed, wherein:
the control and scheduling service node (41) is configured to acquire attribution data of the JBOD, wherein the attribution data of the JBOD represents a mapping relationship between at least one JBOD and a storage service node to which the at least one JBOD belongs; and
the control and scheduling service node (41) is further configured to detect an abnormal storage service node in the dual-head storage service node group, and schedule a JBOD mounted on the abnormal storage service node to a normal storage service node in the dual-head storage service node group based on the attribution data of the JBOD.

12. An electronic device (5), comprising a processor (51) and a memory (52); wherein
the memory (52) stores computer-executable instructions; and
the processor (51) executes the computer-executable instructions stored in the memory (52) to cause the processor (51) to execute the method for scheduling the resource for Just a Bunch of Disks (JBOD) according to any of claims 1 to 9.

13. A computer-readable storage medium storing computer-executable instructions, wherein the computer-executable instructions, when executed by a processor, implement the method for scheduling the resource for Just a Bunch of Disks (JBOD) according to any of claims 1 to 9.

14. A computer program product comprising a computer program, wherein the computer program, when executed by a processor, implement the method for scheduling the resource for Just a Bunch of Disks (JBOD) according to any of claims 1 to 9.
